# EUROPÄISCHE PATENTANMELDUNG

(11) **EP 4 775 466 A1**
(43) Veröffentlichungstag der Anmeldung: **15.07.2026**
(21) Anmeldenummer: 25220332.8
(22) Anmeldetag: 03.12.2025
(51) Int. Cl.: B61D 27/00, B60H 1/00

(54) **SPURGEFÜHRTES FAHRZEUG**

(30) Priorität: 10.01.2025 DE 102025100676
(71) Anmelder: Siemens Mobility GmbH, 80997 München (DE)
(72) Erfinder: Ehrig, Markus, 47829 Krefeld (DE); Kasap, Irfan, 47829 Krefeld (DE)
(74) Vertreter: Siemens Patent Attorneys

(57) **Zusammenfassung**

Spurgeführtes Fahrzeug 1 zum Personentransport, umfassend einen Innenraum 2 und zumindest ein Heizsystem 10 zum Beheizen des Innenraums 2, wobei das Heizsystem 10 zumindest eine Flächenheizung 210, 310 und eine Steuerungseinrichtung 500 aufweist, wobei die Steuerungseinrichtung 500 dazu eingerichtet ist, eine Heizleistung H der Flächenheizung 210, 310 anhand zumindest zweier Parameter RI_{I}, R_{A}, B, RI_{S} einzustellen.

## Beschreibung

Die Erfindung betrifft ein spurgeführtes Fahrzeug zum Personentransport, umfassend einen Innenraum und zumindest ein Heizsystem zum Beheizen des Innenraums.

Ferner betrifft die Erfindung ein Verfahren zum Beheizen eines spurgeführten Fahrzeugs zum Personentransport, umfassend einen Innenraum und zumindest ein Heizsystem zum Beheizen des Innenraums.

Ferner betrifft die Erfindung ein Computerprogrammprodukt, das in einem Computer eines spurgeführten Fahrzeugs zu verwenden ist, wobei das Computerprogrammprodukt bei Ausführung den Computer veranlasst, ein solches oder wie nachfolgend beschrieben, weitergebildetes Verfahren, durchzuführen.

Computerlesbares Aufzeichnungsmedium, auf dem ein Computerprogrammprodukt aufgezeichnet ist, wobei das Computerprogrammprodukt bei Ausführung, geeignet ist, in einem Computer des spurgeführten Fahrzeugs zu veranlassen, ein solches oder wie nachfolgend beschrieben, weitergebildetes Verfahren durchzuführen.

Ferner betrifft die Erfindung einen digitalen Zwilling eines solchen oder, wie nachfolgend beschrieben, weitergebildeten spurgeführten Fahrzeugs.

In spurgeführten Fahrzeugen, wie Schienenfahrzeugen, werden üblicherweise Klimakanäle verwendet, um den Innenraum mit konditionierter Luft zu versorgen und gleichzeitig Frischluft durch eine Klimaanlage zuzuführen. Der verfügbare Bauraum für diese Klimakanäle ist jedoch begrenzt, was ihre Integration in die Zwischenwände aufwendig und kostspielig macht.

Der aktuelle Stand der Technik bei Klimakanälen in Schienenfahrzeugen zeigt, dass diese aufgrund des begrenzten Bauraums oft aufwendig verlegt werden müssen. Dies führt zu erhöhten Kosten, einer Verkleinerung des inneren Bauraums des Fahrzeugs und möglicherweise zum Wegfall von Sitzplätzen.

Durch immer anspruchsvollere Anforderungen müssen spurgeführte Fahrzeuge des Personentransports, wie Schienenfahrzeuge, Klima-Komfortnormen, wie z.B. die EN13129, EN14750 etc. erfüllen. Immer häufiger müssen komplexe Luftkanalsysteme entwickelt werden, um die Komfortnormen zu erfüllen. Speziell in Bereichen, wie z.B. dem Einstieg gestaltet es sich aufgrund des engen Bauraumes schwierig Luftkanalsysteme zu implementieren und ausreichend zu dimensionieren. Diese Klimakomfortnormen müssen immer häufiger in einem akkreditierten Prüfinstitut nachgewiesen werden. Dabei werden die vorher simulierten Luftkanalsysteme validiert und häufig vor Ort nochmal angepasst, wodurch zusätzliche Kosten entstehen.

Aktuell werden komplexe Luftkanalsysteme entwickelt, um die Klimakomfortnormen z.B. im Einstieg zu erfüllen. Häufig werden zusätzlich zum Luftkanalsystem elektrische Konvektoren verbaut, um die Innenraumbereiche zu beheizen. Diese Methoden benötigen viel Platz im Fahrzeug und einen hohen Fertigungsaufwand.

Problematisch ist auch, dass mit dem Verzicht von luftbasierten Heizungen mit Luftkanalsystemen die Heizungssysteme eine gewisse Trägheit in Bezug auf einen Temperaturwechsel aufweisen können
Ausgehend davon, liegt der Erfindung die Aufgabe zugrunde, ein spurgeführtes Fahrzeug bereitzustellen, das ein platzsparendes Heizsystem aufweist, das eine konstante Beheizung eines Innenraums erlaubt.

Diese Aufgabe wird durch das spurgeführte Fahrzeug des Anspruchs 1 gelöst. Ferner wird diese Aufgabe durch das Verfahren des Anspruchs 12 gelöst. Weiter wird diese Aufgabe durch das Computerprogrammprodukt des Anspruchs 22 gelöst. Ferner wird diese Aufgabe durch das computerlesbare Aufzeichnungsmedium des Anspruchs 23 gelöst. Weiterhin wird die Aufgabe durch den digitalen Zwilling des Anspruchs 24 gelöst.

Vorteilhafte Ausgestaltungen und Weiterbildungen sind Gegenstand der jeweiligen Unteransprüche.

Erfindungsgemäß wird ein spurgeführtes Fahrzeug zum Personentransport bereitgestellt, umfassend einen Innenraum und zumindest ein Heizsystem zum Beheizen des Innenraums, wobei das Heizsystem zumindest eine Flächenheizung und eine Steuerungseinrichtung aufweist. Die Steuerungseinrichtung ist dazu eingerichtet, eine Heizleistung der Flächenheizung anhand zumindest zweier Parameter einzustellen.

Ferner wird erfindungsgemäß ein Verfahren zum Beheizen eines spurgeführten Fahrzeugs zum Personentransport bereitgestellt, umfassend einen Innenraum und zumindest ein Heizsystem zum Beheizen des Innenraums, wobei das Heizsystem zumindest eine Flächenheizung und eine Steuerungseinrichtung aufweist, wobei das Verfahren durch den folgenden Schritt gekennzeichnet ist: Einstellen der Heizleistung der Flächenheizung an anhand zumindest zweier Parameter durch die Steuerungseinrichtung.

Ferner wird erfindungsgemäß ein Computerprogrammprodukt bereitgestellt, das in einem Computer eines spurgeführten Fahrzeugs zu verwenden ist, wobei das Computerprogrammprodukt bei Ausführung den Computer veranlasst, ein solches oder wie nachfolgend beschrieben, weitergebildetes Verfahren, durchzuführen.

Ferner wird erfindungsgemäß ein computerlesbares Aufzeichnungsmedium, auf dem ein Computerprogrammprodukt aufgezeichnet ist, bereitgestellt, wobei das Computerprogrammprodukt bei Ausführung geeignet ist, in einem Computer des spurgeführten Fahrzeugs zu veranlassen, ein solches oder wie nachfolgend beschrieben, weitergebildetes Verfahren, durchzuführen.

Erfindungsgemäß wird ferner ein digitaler Zwilling eines solchen oder wie nachfolgend beschrieben, weitergebildeten spurgeführten Fahrzeugs, bereitgestellt, wobei der digitale Zwilling ein digitalisiertes Abbild des spurgeführten Fahrzeugs umfasst.

Die zumindest eine Flächenheizung ist zum Heizen des Innenraums ausgebildet und innerhalb des spurgeführten Fahrzeugs angeordnet.

Vorzugsweise handelt es sich bei der zumindest eine Flächenheizung um eine elektrisch betriebene Flächenheizung.

Die zumindest eine Flächenheizung ist dazu ausgebildet, Wärme in den Innenraum abzugeben.

Bei dem spurgeführten Fahrzeug handelt es sich beispielsweise um ein Schienenfahrzeug oder eine Magnetschwebebahn.

Vorzugsweise handelt es sich bei dem Schienenfahrzeug um einen elektrischen Triebzug.

Durch das erfindungsgemäße Vorsehen der zumindest einen Flächenheizung, ist es möglich, auf bisherige Heizeinrichtungen zu verzichten, welche bisher zusätzlichen Bauraum im Innenraum beansprucht haben.

Ein Unterschied zwischen der Erfindung und den bekannten Lösungen bestehen darin, dass ein Teil des komplexen Luftkanalsystems und/oder zusätzliche elektrische Konvektoren im Innenraum des spurgeführten Fahrzeugs, eingespart werden können.

Durch die erfindungsgemäße Lösung ist eine effiziente Raumnutzung im spurgeführten Fahrzeug gegeben.

Des Weiteren ist die erfindungsgemäße Lösung kosteneffizienter als manche bisherigen Lösungen, da das Vorsehen von Klimakanälen für die Heizung oder das Vorsehen von zusätzlichen Heizern nicht mehr nötig ist.

Bekannte Lösungen setzen in der Regel auf einfache Thermostate bzw. zeitgesteuerte Systeme ein, die nicht auf Echtzeit-Daten zur Passagieranzahl zurückgreifen. Ebenso nutzen bekannte Lösungen oft statische Einstellungen, was zu ineffizientem Energieverbrauch führen kann.

Erfindungsgemäß werden zumindest zwei Parameter genutzt, um die Heizleistung der zumindest einen Flächenheizung einzustellen. Hierdurch können Trägheitseffekte der zumindest einen Flächenheizung kompensiert werden.

Erfindungsgemäß wird die thermische Trägheit berücksichtigt und genutzt, um Energie effizienter zu nutzen, indem die zumindest eine Flächenheizung frühzeitig eingeschaltet wird, um eine angenehme Temperatur zu erreichen.

Durch die Erfindung wird eine dynamische und flexible Heizleistungssteuerung erreicht, sowie eine energieeffiziente Wärmeverteilung erreicht. Ferner ist eine bessere Anpassung an unterschiedliche Umgebungsbedingungen sowie eine ressourcenschonende Heizungsregelung möglich.

In Ausgestaltung des spurgeführten Fahrzeugs kann vorgesehen sein, dass die zumindest zwei Parameter zwei oder mehrere aus der Gruppe der folgenden Parameter sind: Innenraum-Isttemperatur, Außentemperatur, Belegungsgrad und/oder Innenraum-Solltemperatur.

In Ausgestaltung des Verfahrens kann vorgesehen sein, dass die zumindest zwei Parameter zwei oder mehrere aus der Gruppe der folgenden Parameter sind: Innenraum-Isttemperatur, Außentemperatur, Belegungsgrad und/oder Innenraum-Solltemperatur.

Hierdurch wird erreicht, dass eine umfassende Parameterbewertung stattfindet und anhand der zumindest zwei Parameter eine Berücksichtigung mehrerer Einflussfaktoren erfolgt, was eine präzise Anpassung der Heizleistung erlaubt.

In Ausgestaltung des spurgeführten Fahrzeugs kann vorgesehen sein, dass das spurgeführte Fahrzeug zumindest eine Fahrgastzähleinrichtung aufweist, die dazu ausgebildet ist, den Belegungsgrad zu ermitteln und den Belegungsgrad an die Steuerungseinrichtung zu senden und die Steuerungseinrichtung ist dazu eingerichtet, basierend auf dem Belegungsgrad als Parameter, die Heizleistung der Flächenheizung einzustellen.

In Ausgestaltung des Verfahrens kann vorgesehen sein, dass das spurgeführte Fahrzeug zumindest eine Fahrgastzähleinrichtung aufweist und das Verfahren die folgenden Schritte aufweist: Ermitteln des Belegungsgrads durch die zumindest eine Fahrgastzähleinrichtung; Senden des Belegungsgrads an die Steuerungseinrichtung; Einstellen der Heizleistung der Flächenheizung durch die Steuerungseinrichtung basierend auf dem Belegungsgrad als Parameter.

Durch das Einbeziehen des Belegungsgrad kann Heizleistung präziser eingestellt werden, um eine gewünschte Innenraumtemperatur zu erzielen.

Hierbei ist es besonders vorteilhaft, wenn bevor Passagiere tatsächlich den Innenraum betreten, die Heizleistung anhand der vorhandenen Belegungsdaten für einen bestimmten Fahrtabschnitt eingestellt wird.

Hierdurch wird eine bedarfsgerechte Heizungssteuerung, eine Energieeinsparung durch Anpassung an Fahrgastzahl sowie ein erhöhter Passagierkomfort erreicht.

Es ist somit möglich, die Leistung der Flächenheizung, abhängig von der aktuellen Besetzung zu reduzieren, was eine flexible und bedarfsgerechte Steuerung ermöglicht.

In Ausgestaltung des spurgeführten Fahrzeugs kann vorgesehen sein, dass das spurgeführte Fahrzeug zumindest einen Innenraum-Isttemperatur-Sensor aufweist, der dazu ausgebildet ist, die Innenraum-Isttemperatur zu ermitteln und die Innenraum-Isttemperatur an die Steuerungseinrichtung zu senden und die Steuerungseinrichtung dazu eingerichtet ist, basierend auf der Innenraum-Isttemperatur als Parameter, die Heizleistung der Flächenheizung, einzustellen.

In Ausgestaltung des Verfahrens kann vorgesehen sein, dass das spurgeführte Fahrzeug zumindest einen Innenraum-Isttemperatur-Sensor aufweist, und das Verfahren die folgenden Schritte aufweist: Ermitteln der Innenraum-Isttemperatur durch den zumindest einen Innenraum-Isttemperatur-Sensor; Senden der Innenraum-Isttemperatur an die Steuerungseinrichtung; Einstellen der Heizleistung der Flächenheizung durch die Steuerungseinrichtung, basierend auf der Innenraum-Isttemperatur als Parameter.

Hierdurch ist es möglich, eine exakte Temperaturüberwachung zu erreichen. Eine Isttemperatur-Rückkopplung erlaubt ferner eine schnelle Temperaturanpassung und eine Vermeidung einer Überheizung des Innenraums, bereits in einem frühen Stadium.

Es ist somit möglich die Leistung der Flächenheizung, abhängig von der aktuellen Innenraum-Isttemperatur als Parameter, zu reduzieren, was eine flexible und bedarfsgerechte Steuerung ermöglicht.

In Ausgestaltung des spurgeführten Fahrzeugs kann vorgesehen sein, dass das spurgeführte Fahrzeug zumindest einen Außentemperatur-Sensor aufweist, der dazu ausgebildet ist, die Außentemperatur zu ermitteln und die Außentemperatur an die Steuerungseinrichtung zu senden und die Steuerungseinrichtung dazu eingerichtet ist, basierend auf der Außentemperatur als Parameter, die Heizleistung der Flächenheizung einzustellen.

In Ausgestaltung des Verfahrens kann vorgesehen sein, dass das spurgeführte Fahrzeug zumindest einen Außentemperatur-Sensor aufweist, und das Verfahren die folgenden Schritte aufweist: Ermitteln der Außentemperatur; Senden der Außentemperatur an die Steuerungseinrichtung; Einstellen der Heizleistung der Flächenheizung durch die Steuerungseinrichtung basierend auf der Außentemperatur als Parameter.

Hierdurch wird erreicht, dass externe Temperatureinflüsse berücksichtigt werden und eine energieoptimierte Heizungsregelung möglich ist. Ferner ist eine Anpassungsfähigkeit an die Außentemperatur und Außentemperaturschwankungen möglich.

Es ist somit möglich die Leistung der Flächenheizung, abhängig von der aktuellen Außentemperatur als Parameter, zu reduzieren, was eine flexible und bedarfsgerechte Steuerung ermöglicht.

In Ausgestaltung des spurgeführten Fahrzeugs kann vorgesehen sein, dass die Steuerungseinrichtung dazu eingerichtet ist, basierend auf der Innenraum-Solltemperatur als Parameter, die Heizleistung der Flächenheizung einzustellen, wobei vorzugsweise die Innenraum-Solltemperatur durch einen Betriebsmodus und/oder eine Mensch-Maschine-Schnittstelle durch die Steuerungseinrichtung vorgebbar ist.

In Ausgestaltung des Verfahrens kann vorgesehen sein, dass das Verfahren durch einen oder mehreren der folgenden Schritte gekennzeichnet ist: Einstellen der Heizleistung der Flächenheizung, basierend auf der Innenraum-Solltemperatur als Parameter, durch die Steuerungseinrichtung; Vorgeben der Innenraum-Solltemperatur durch einen Betriebsmodus und/oder eine Mensch-Maschine-Schnittstelle durch die Steuerungseinrichtung.

Hierdurch ist eine individuelle Temperatureinstellung möglich und eine flexible Solltemperatur-Konfiguration. Es kann zudem durch die Auswahl des Betriebsmodus eine nutzerseitige Temperaturanpassung geschehen und eine komfortable Steuerungsmöglichkeit ist gegeben.

In Ausgestaltung des spurgeführten Fahrzeugs kann vorgesehen sein, dass die Steuerungseinrichtung eingerichtet ist, die Heizleistung der Flächenheizung bei einer Veränderung des Belegungsgrad präventiv, einzustellen, bevor eine Änderung der Innenraum-Isttemperatur ermittelt wird.

In Ausgestaltung des Verfahrens kann vorgesehen sein, dass das Verfahren durch den folgenden Schritt gekennzeichnet ist: Präventives Einstellen der Heizleistung der Flächenheizung bei einer Veränderung des Belegungsgrads durch die Steuerung, bevor eine Änderung der Innenraum-Isttemperatur ermittelt wird.

Vorzugsweise ist die Heizleistung reduzierbar bei Steigerung der Belegungsrate und erhöhbar, bei Verringerung der Belegungsrate.

Hierdurch ist eine vorausschauende Heizleistungssteuerung und eine proaktive Vermeidung von Temperatursprüngen möglich. Dies führt zu einer verbesserten thermischen Stabilität.

Durch die Nutzung von Nutzung von Besetzungs- und Fahrgastzählsignalen ist es möglich, die Heizleistung der Flächenheizung abhängig der aktuellen Besetzung zu reduzieren, was eine flexible und bedarfsgerechte Steuerung ermöglicht, präventiv bevor Passagiere tatsächlich den Innenraum betreten.

Hierdurch wird die thermische Trägheit genutzt, um Energie effizienter zu nutzen, indem die Heizung frühzeitig eingeschaltet wird, um eine angenehme Temperatur zu erreichen, wenn Passagiere eintreffen.

Dies ermöglicht eine Komfortsteigerung für Passagiere, indem der Innenraum bereits angenehm temperiert ist, wenn Passagiere einsteigen, was den Komfort erheblich steigert.

In Ausgestaltung des spurgeführten Fahrzeugs kann vorgesehen sein, dass das spurgeführte Fahrzeug eine Mehrzahl an Klimazonen aufweist, wobei für jede Klimazone der Belegungsgrad und/oder die Innenraum-Isttemperatur ermittelbar ist und/oder eine Innenraum-Solltemperatur vorgebbar ist und die Steuerungseinrichtung dazu eingerichtet ist, die Heizleistung der Flächenheizung für jede Klimazone individuell einzustellen und/oder jede Klimazone individuell temperierbar ist.

In Ausgestaltung des Verfahrens kann vorgesehen sein, das spurgeführte Fahrzeug eine Mehrzahl an Klimazonen aufweist und das Verfahren einen oder mehreren der folgenden Schritte umfasst: Ermitteln des Belegungsgrads für jede Klimazone; Ermitteln der Innenraum-Isttemperatur für jede Klimazone; Vorgeben einer Innenraum-Solltemperatur für jede Klimazone; Individuelles Einstellen der Heizleistung der Flächenheizung für jede Klimazone durch die Steuerungseinrichtung; Individuelles Temperieren jeder Klimazone.

Hierdurch wird eine zonale Temperaturregelung ermöglicht und eine individualisierte Klimatisierung je Klimazone erreicht. Dies steigert die Flexibilität in der Temperatursteuerung und erlaubt eine differenzierte Heizungsleistungseinstellung.

In Ausgestaltung des spurgeführten Fahrzeugs kann vorgesehen sein, dass das spurgeführte Fahrzeug ein Doppelstockfahrzeug ist, mit zumindest einem Oberstock und einem Unterstock, wobei der Oberstock zumindest einen Passagierbereich aufweist und der Unterstock zumindest einen Passagierbereich und einen Eingangsbereich aufweist.

Dies ermöglicht eine optimierte Raumnutzung mit einer flexible Fahrzeugarchitektur und verbesserte Passagierkapazität unter Nutzung der erfindungsgemäßen Vorteile.

In Ausgestaltung des Verfahrens kann vorgesehen sein, dass das spurgeführte Fahrzeug ein Doppelstockfahrzeug ist, mit zumindest einem Oberstock und einem Unterstock, wobei der Oberstock zumindest einen Passagierbereich aufweist und der Unterstock zumindest einen Passagierbereich und einen Eingangsbereich aufweist.

Hierdurch wird eine konkrete Konfiguration eines Doppelstockfahrzeugs angegeben, in welchem die Platzverhältnisse besonders kritisch sind und der Wegfall eines Klimakanals für die Heizungen des Oberstocks und des Unterstocks besonders große Vorteile in Bezug auf die Platzverhältnisse hat, die sich daraus ergeben.

In Ausgestaltung des spurgeführten Fahrzeugs kann vorgesehen sein, dass der Oberstock und der Unterstock jeweils zumindest eine Flächenheizung aufweisen und/oder das zumindest eine Flächenheizung in einem Passagierbereich oder in einem Eingangsbereich des spurgeführten Fahrzeugs angeordnet ist.

In Ausgestaltung des Verfahrens kann vorgesehen sein, dass der Oberstock und der Unterstock jeweils zumindest eine Flächenheizung aufweisen und/oder die zumindest eine Flächenheizung in einem Passagierbereich oder in einem Eingangsbereich des spurgeführten Fahrzeugs angeordnet ist.

Hierdurch ist es möglich, sowohl im Oberstock als auch im Unterstock Heizluftkanäle entfallen zu lassen. Die Heizluftkanäle sind somit auch nicht im Übergang / der Decke / dem Boden zwischen Oberstock und Unterstock ausgebildet, was weitere Vorteile bietet.

Ferner kann hierdurch in zumindest einem Passagierbereich Bauraum für Heizkanäle eingespart werden.

Ferner kann hierdurch kann in zumindest einem Eingangsbereich, in dem der Bauraum besonders knapp ist, Bauraum für Heizkanäle eingespart werden.

Weiterhin wird hierdurch eine gleichmäßige Wärmeverteilung erreicht und eine umfassende Heizungsabdeckung bei optimierte Wärmeübertragung und Flexibilität in der Heizungsplatzierung erreicht.

In Ausgestaltung des spurgeführten Fahrzeugs kann vorgesehen sein, dass der Oberstock zumindest eine erste Klimazone, in der die zumindest eine Flächenheizung angeordnet ist, aufweist und der Unterstock zumindest eine zweite Klimazone, in der die zumindest eine Flächenheizung angeordnet ist, aufweist, welche jeweils individuell durch die zumindest eine Flächenheizung temperierbar sind.

In Ausgestaltung des Verfahrens kann vorgesehen sein, dass der Oberstock zumindest eine erste Klimazone, in der die zumindest eine Flächenheizung angeordnet ist, aufweist und der Unterstock zumindest eine zweite Klimazone, in der die zumindest eine Flächenheizung angeordnet ist, und das Verfahren den folgenden Schritt aufweist: Individuelles Temperieren der zumindest einen ersten Klimazone und der zumindest einen zweiten Klimazone durch die jeweilige zumindest eine Flächenheizung temperierbar sind.

Durch das Bereitstellen zumindest einer ersten Klimazone im Oberstock und zumindest einer zweiten Klimazone im Unterstock wird erreicht, dass Oberstock und Unterstock unterschiedlich temperierbar sind. Ferner können die Heizleistungen entsprechend an die Anzahl der Personen individuell angepasst werden oder die Solltemperatur der ersten Klimazone und oder der zweiten Klimazone entsprechend angepasst werden.

Hierdurch wird eine unabhängige Zonenklimatisierung differenziert nach Oberstock und Unterstock ermöglicht und es ist ein individueller Komfort pro Stockwerk bei optimaler Wärmeverteilung möglich.

In Ausgestaltung des spurgeführten Fahrzeugs kann vorgesehen sein, dass die zumindest eine Flächenheizung an einem Boden und/oder an der Wand des spurgeführten Fahrzeugs angeordnet ist.

Die Anordnung der zumindest einen Flächenheizung am Boden und/oder der Wand führt dazu, dass keine Schichtungsprobleme im Heizfall auftreten, wie diese auftreten würden, wenn die zumindest eine Flächenheizung an der Decke angeordnet werden würde.

In Ausgestaltung des spurgeführten Fahrzeugs kann vorgesehen sein, das spurgeführte Fahrzeug eine Lüftungs- und Klimaanlage aufweist, die zum Lüften und Klimatisieren des Innenraums eingerichtet ist.

Hierdurch wird erreicht, dass der Innenraum gelüftet und/oder klimatisierbar ist und neben der Temperatur die entsprechenden Raumluftparameter wie Luftfeuchtigkeit, CO₂-Gehalt oder VOC-Mischgaskonzentration einhaltbar sind.

In Ausgestaltung des spurgeführten Fahrzeugs kann vorgesehen sein, dass die Lüftungs- und Klimaanlage keine Heizluftklimakanäle aufweist.

Hierdurch wird Bauraum für die Heizluftklimakanäle gespart.

In Ausgestaltung des spurgeführten Fahrzeugs kann vorgesehen sein, dass die Lüftungs- und Klimaanlage lediglich zur Erwärmung von Außenluft bis zu einer Innenraumluftsolltemperatur eingerichtet ist.

Die Heizung der Klimaanlage kann dann nur noch für die Erwärmung der Außenluft auf max. die Raumtemperatur/ Innenraumluftsolltemperatur und in dieser Temperatur in den Raum geführt, damit noch eine Zirkulation im Raum stattfinden kann. Es werden hierfür dann nur noch die Deckenkanäle verwendet, um die Raumluft mit Frischluft zu versorgen. Bei einer höheren Temperatur als Raumluft besteht die Gefahr, dass sich eine Schichtung im Raum einstellt, wenn Warmluft dem Raum von oben zugeführt wird.

Hierdurch wird erreicht, dass auf zusätzliche Heizer in der Lüftungs- und Klimaanlage verzichtet werden kann und die Lüftungs- und Klimaanlage kleinbauend und kostengünstig ausgebildet ist. Des Weiteren müssen keine zusätzlichen Lüftungskanäle für die Heizluft vorgesehen werden, welche üblicherweise Heizluft in die Nähe des Fahrzeugboden leiten, wenn diese über Heizluftkanäle verteilt wird.

In Ausgestaltung des spurgeführten Fahrzeugs kann vorgesehen sein, dass der Innenraum frei von Konvektionsheizern ist.

Hierdurch wird erreicht, dass zusätzlicher Bauraum frei bleibt, und geringere Restriktionen in Bezug auf den Innenausbau des spurgeführten Fahrzeugs gegeben sind. Insbesondere auf die Konfektionsheizer, welche im Bereich des Übergangs von Wand zum Boden angeordnet sind, kann verzichtet werden, sodass die Beinfreiheit für die Passagiere verbessert werden kann.

In Ausgestaltung des spurgeführten Fahrzeugs kann vorgesehen sein, dass die zumindest eine Flächenheizung in ein Wandverkleidungselement, das vorzugsweise aus einem Faserverbundwerkstoff gefertigt ist, integriert ist.

Hierdurch wird eine besonders platzsparende Möglichkeit zur Positionierung der zumindest einen Flächenheizung in einer Wand bereitgestellt.

Wandverkleidungselemente, wie bspw. Wandpaneele können vormontiert werden und müssten somit nur in das spurgeführte Fahrzeug eingesetzt werden, wodurch Fertigungsaufwand reduziert werden kann. Des Weiteren wird das Problem einer unsachgemäßen Fertigung im spurgeführten Fahrzeug behoben, welches schnell zu Beschädigungen des Luftkanals führen kann. Dadurch kann die komplette Klimatisierung in diesen Bereichen beeinflusst werden, wodurch die vom Kunden geforderten Klimakomfortnormen nicht mehr erfüllt werden können.

In Ausgestaltung des spurgeführten Fahrzeugs kann vorgesehen sein, dass die zumindest eine Flächenheizung in einen Bodenaufbau, vorzugsweise als Schichtsystem, integriert ist.

Hierdurch wird eine besonders platzsparende Möglichkeit zur Positionierung der zumindest einen Flächenheizung in einem Boden bereitgestellt.

Vorzugsweise ist die zumindest eine Flächenheizung in einem Bodenelement angeordnet.

Bodenelemente, wie bspw. Bodenpaneele können vormontiert werden und müssten somit nur in das spurgeführte Fahrzeug eingesetzt werden, wodurch Fertigungsaufwand reduziert werden kann. Des Weiteren wird das Problem einer unsachgemäßen Fertigung im spurgeführten Fahrzeug behoben, welches schnell zu Beschädigungen des Luftkanals führen kann. Dadurch kann die komplette Klimatisierung in diesen Bereichen beeinflusst werden, wodurch die vom Kunden geforderten Klimakomfortnormen nicht mehr erfüllt werden können.

In Ausgestaltung des spurgeführten Fahrzeugs kann vorgesehen sein, dass die zumindest eine Flächenheizung eine maximale Oberflächentemperatur von 35°C aufweist.

Hierdurch wird erreicht, dass einerseits die zulässige Oberflächentemperatur der zumindest eine Flächenheizung, nicht überschritten wird.

Nachfolgend soll die Erfindung anhand eines Ausführungsbeispiels mit Bezug auf die Zeichnungen erläutert werden.

Es zeigt:
- Fig. 1: eine schematische Schnittdarstellung eines erfindungsgemäßen spurgeführten Fahrzeugs;
- Fig. 2: ein schematisches Diagramm der Heizleistung und der Raumtemperatur über die Zeit eines Heizsystems eines erfindungsgemäßen spurgeführten Fahrzeugs;
- Fig. 3: das erfindungsgemäße Verfahren zum Beheizen eines spurgeführten Fahrzeugs zum Personentransport.

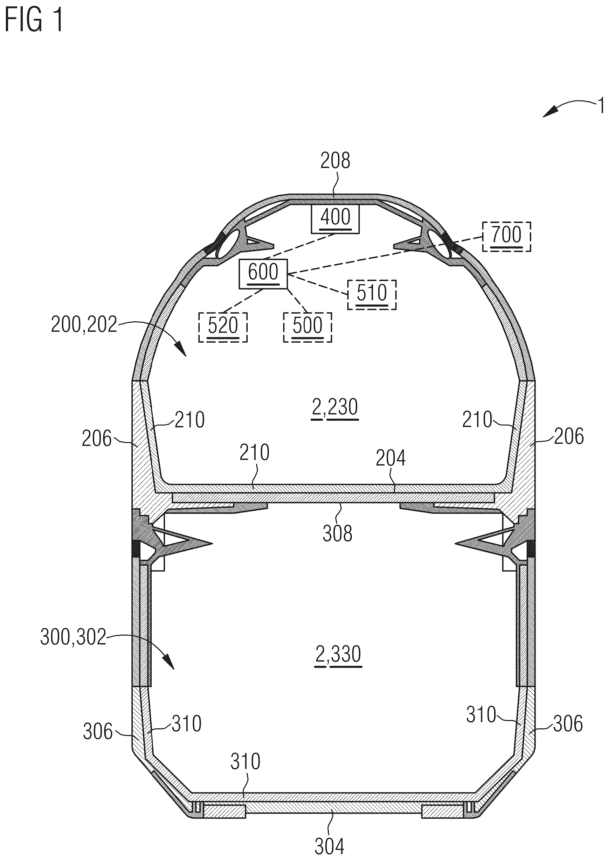

Fig. 1 zeigt eine schematische Schnittdarstellung eines erfindungsgemäßen spurgeführten Fahrzeugs 1 zum Personentransport.

Das spurgeführte Fahrzeug 1 zum Personentransport, umfasst einen Innenraum 2 und zumindest ein Heizsystem 10 zum Beheizen des Innenraums 2.

Das Heizsystem 10 weist zumindest eine Flächenheizung 210, 310 auf.

Das Heizsystem 10 weist zumindest eine Steuerungseinrichtung 500 auf.

Die Steuerungseinrichtung 500 ist dazu eingerichtet, eine Heizleistung H der Flächenheizung 210, 310 anhand zumindest zweier Parameter RI_{I}, R_{A}, B, RI_{S} einzustellen.

Die zumindest eine Flächenheizung 210, 310 ist zum Heizen des Innenraums 2 ausgebildet und innerhalb des spurgeführten Fahrzeugs angeordnet.

Die zumindest eine Flächenheizung 210, 310 ist dazu ausgebildet, Wärme in den Innenraum 2 einzubringen.

Die zumindest eine Flächenheizung 210, 310 ist an einem Boden 204, 304 und/oder an der Wand 206, 306 des spurgeführten Fahrzeugs 1 angeordnet.

Das spurgeführte Fahrzeug weist ferner eine Lüftungs- und Klimaanlage 400 auf, die zum Lüften und Klimatisieren des Innenraums 2 eingerichtet ist.

Die Lüftungs- und Klimaanlage 400 weist keine Heizluftklimakanäle auf.

Die Lüftungs- und Klimaanlage 400 ist lediglich zur Erwärmung von Außenluft bis zu einer Innenraumluftsolltemperatur eingerichtet.

Der Innenraum 2 des spurgeführten Fahrzeugs ist frei von Konvektionsheizern.

Die zumindest eine Flächenheizung 210, 310 ist in Ausgestaltung in ein Wandverkleidungselement, das vorzugsweise aus einem Faserverbundwerkstoff gefertigt ist, integriert.

Die zumindest eine Flächenheizung 210, 310 ist in einen Bodenaufbau, vorzugsweise als Schichtsystem, integriert.

Die zumindest zwei Parameter RI_{I}, R_{A}, B, RI_{S} sind zwei oder mehrere aus der Gruppe der folgenden Parameter: Innenraum-Isttemperatur RI_{I}, Außentemperatur R_{A}, Belegungsgrad B und/oder Innenraum-Solltemperatur RI_{S}.

Das spurgeführte Fahrzeug 1 weist zumindest eine Fahrgastzähleinrichtung 600 aufweist, die dazu ausgebildet ist, den Belegungsgrad B zu ermitteln und den Belegungsgrad B an die Steuerungseinrichtung 500 zu senden.

Die Steuerungseinrichtung 500 ist dazu eingerichtet basierend auf dem Belegungsgrad B als Parameter B die Heizleistung H der Flächenheizung 210, 310 einzustellen.

Das spurgeführte Fahrzeug 1 weist zumindest einen Innenraum-Isttemperatur-Sensor 510 auf, der dazu ausgebildet ist, die Innenraum-Isttemperatur RI_{I} zu ermitteln und die Innenraum-Isttemperatur RI_{I} an die Steuerungseinrichtung 500 zu senden.

Die Steuerungseinrichtung 500 dazu eingerichtet basierend auf der Innenraum-Isttemperatur RI_{I} als Parameter RI_{I} die Heizleistung H der Flächenheizung 210, 310 einzustellen.

Das spurgeführte Fahrzeug 1 weist zumindest einen Außentemperatur-Sensor 520 auf, der dazu ausgebildet ist, die Außentemperatur R_{A} zu ermitteln und die Außentemperatur R_{A} an die Steuerungseinrichtung 500 zu senden.

Die Steuerungseinrichtung 500 ist dazu eingerichtet, basierend auf der Außentemperatur R_{A} als Parameter R_{A} die Heizleistung H der Flächenheizung 210, 310 einzustellen.

Die Steuerungseinrichtung 500 ist dazu eingerichtet, basierend auf der Innenraum-Solltemperatur RI_{S} als Parameter RI_{S} die Heizleistung H der Flächenheizung 210, 310 einzustellen.

Die Innenraum-Solltemperatur RI_{S} ist durch einen Betriebsmodus und/oder eine Mensch-Maschine-Schnittstelle 700 durch die Steuerungseinrichtung 500 vorgebbar.

Das spurgeführte Fahrzeug weist eine Mehrzahl an Klimazonen 230, 231, 330, 331 auf, wobei für jede Klimazone 230, 231, 330, 331 der Belegungsgrad B und/oder die Innenraum-Isttemperatur RI_{I} ermittelbar ist und/oder eine Innenraum-Solltemperatur RI_{S} vorgebbar ist.

Die Steuerungseinrichtung 500 ist dazu eingerichtet, die Heizleistung H der Flächenheizung 210, 310 für jede Klimazone 230, 231, 310, 331 individuell einzustellen und/oder jede Klimazone 230, 231, 310, 331 ist individuell temperierbar.

Gemäß der Ausführungsform ist das spurgeführte Fahrzeug 100 ein Doppelstockfahrzeug, mit zumindest einem Oberstock 200 und einem Unterstock 300.

Der Oberstock 200 weist zumindest einen Passagierbereich 202 auf und der Unterstock 300 weist zumindest einen Passagierbereich 302 und zumindest einen Eingangsbereich auf.

Der Oberstock 200 und der Unterstock 300 weisen jeweils zumindest eine Flächenheizung 210, 310 auf.

Die zumindest eine Flächenheizung 210, 310 ist in einem Passagierbereich 202, 302 des spurgeführten Fahrzeugs 1 angeordnet.

Es kann auch vorgesehen sein, dass die zumindest eine Flächenheizung 210, 310 in einem Eingangsbereich des spurgeführten Fahrzeugs 1 angeordnet ist (nicht gezeigt in Fig. 1).

Der Oberstock 200 weist zumindest eine erste Klimazone 230, 231, in der die zumindest eine Flächenheizung 210, 310 angeordnet ist, auf, welche jeweils individuell temperierbar ist.

Der Unterstock 300 weist zumindest eine zweite Klimazone 330, 331, in der die zumindest eine Flächenheizung 210, 310 angeordnet ist, auf, welche jeweils individuell temperierbar ist.

Die zumindest eine Flächenheizung 210, 310 weist eine maximale Oberflächentemperatur T₁ von 35°C auf.

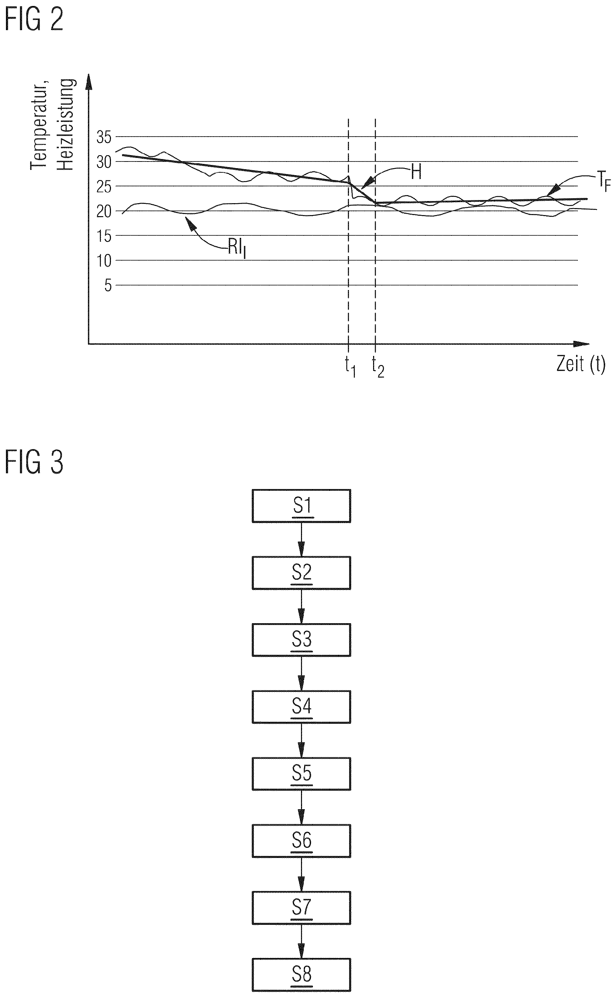

Fig. 2 zeigt ein schematisches Diagramm der Heizleistung H und der Innenraum-Isttemperatur RI_{I} über die Zeit des Heizsystems 10 eines erfindungsgemäßen spurgeführten Fahrzeugs 1.

Die Steuerungseinrichtung 500 ist eingerichtet, die Heizleistung H der Flächenheizung 210, 310 bei einer Veränderung des Belegungsgrad B präventiv, einzustellen, bevor eine Änderung der Innenraum-Isttemperatur RI_{I} ermittelt wird. Dies geschieht, um die Innenraum-Isttemperatur RI_{I} in einem gewünschten Bereich zu halten.

Die Heizleistung H wird dazu zu einem ersten Zeitpunkt t₁ reduziert, bis zu einem zweiten Zeitpunkt t₂ eine Heizleistung H erreicht ist, welche entsprechend niedrig ist, dass die gewünschte Innenraum-Isttemperatur RI_{I} in einem vorgegebenen Bereich, also konstant, bleibt.

Eine Einstellung der Heizleistung erfolgt hier über eine Einstellung der Oberflächentemperatur T der Flächenheizung 310.

Fig. 3 zeigt eine das erfindungsgemäße Verfahren zum Beheizen eines spurgeführten Fahrzeugs zum Personentransport, umfassend einen Innenraum 2 und zumindest ein Heizsystem 10 zum Beheizen des Innenraums 2, wobei das Heizsystem 10 zumindest eine Flächenheizung 210, 310 und eine Steuerungseinrichtung 500 aufweist.

Nachfolgend wird eine Ausführungsform des Verfahrens beschrieben, wobei jedoch auch andere Ausführungsformen in Bezug auf das Verfahren möglich sind, welche von der in Fig. 3 gezeigten und nachfolgend beschriebenen Ausführungsform möglich sind.

Das Verfahren umfasst dabei den folgenden Schritt S1 auf: Einstellen der Heizleistung H der Flächenheizung an anhand zumindest zweier Parameter RI_{I}, R_{A}, B, RI_{S} durch die Steuerungseinrichtung 500.

Verfahrensgemäß sind die zumindest zwei Parameter RI_{I}, R_{A}, B, RI_{S} zwei oder mehrere aus der Gruppe der folgenden Parameter: Innenraum-Isttemperatur RI_{I}, Außentemperatur R_{A}, Belegungsgrad B und/oder Innenraum-Solltemperatur RI_{S}.

Weiterhin umfasst verfahrensgemäß das spurgeführte Fahrzeug 1 zumindest eine Fahrgastzähleinrichtung 600 aufweist und das Verfahren weist folgende Schritte auf S2: Ermitteln des Belegungsgrads B durch die zumindest eine Fahrgastzähleinrichtung 600; Senden des Belegungsgrad B an die Steuerungseinrichtung 500; Einstellen der Heizleistung H der Flächenheizung 210, 310 durch die Steuerungseinrichtung 500 basierend auf dem Belegungsgrad B als Parameter B.

Weiterhin umfasst verfahrensgemäß das spurgeführte Fahrzeug 1 zumindest einen Innenraum-Isttemperatur-Sensor 510 auf, und das Verfahren weist die folgenden Schritte S3 auf: Ermitteln der Innenraum-Isttemperatur RI_{I} durch den zumindest einen Innenraum-Isttemperatur-Sensor 510; Senden der Innenraum-Isttemperatur RI_{I} an die Steuerungseinrichtung 500; Einstellen der Heizleistung H der Flächenheizung 210, 310 durch die Steuerungseinrichtung 500 basierend auf der Innenraum-Isttemperatur RI_{I} als Parameter RI_{I}.

Weiterhin umfasst verfahrensgemäß das spurgeführte Fahrzeug 1 zumindest einen Außentemperatur-Sensor 520, und das Verfahren die folgenden Schritte S4 auf: Ermitteln der Außentemperatur R_{A}; Senden der Außentemperatur R_{A} an die Steuerungseinrichtung 500; Einstellen der Heizleistung H der Flächenheizung 210, 310 durch die Steuerungseinrichtung 500 basierend auf der Außentemperatur R_{A} als Parameter R_{A}.

Weiterhin umfasst das Verfahren einen oder mehrere der folgende Schritte S5:
Einstellen der Heizleistung H der Flächenheizung 210, 310 basierend auf der Innenraum-Solltemperatur RI_{S} als Parameter RI_{S}; Vorgeben der Innenraum-Solltemperatur RI_{S} durch einen Betriebsmodus und/oder eine Mensch-Maschine-Schnittstelle 700 durch die Steuerungseinrichtung 500.

Weiterhin umfasst das Verfahren den folgenden Schritt S6: Präventives Einstellen der Heizleistung H der Flächenheizung 210, 310 bei einer Veränderung des Belegungsgrad B durch die Steuerungseinrichtung 500, bevor eine Änderung der Innenraum-Isttemperatur RI_{I} ermittelt wird.

Verfahrensgemäß weist das spurgeführte Fahrzeug eine Mehrzahl an Klimazonen 230, 231, 330, 331 auf und das Verfahren umfasst einen oder mehreren der folgenden Schritte S7: Ermitteln des Belegungsgrads B für jede Klimazone 230, 231, 330, 331; Ermitteln der Innenraum-Isttemperatur RI_{I} für jede Klimazone 230, 231, 330, 331;Vorgeben einer Innenraum-Solltemperatur RI_{S} für jede Klimazone 230, 231, 330, 331; Individuelles Einstellen der Heizleistung H der Flächenheizung 210, 310 für jede Klimazone 230, 231, 310, 331 durch die Steuerungseinrichtung 500; Individuelles Temperieren jeder Klimazone 230, 231, 310, 331.

Verfahrensgemäß ist das spurgeführte Fahrzeug 100 in Ausgestaltung ein Doppelstockfahrzeug, mit zumindest einem Oberstock 200 und einem Unterstock 300, wobei der Oberstock 200 zumindest einen Passagierbereich 202 aufweist und der Unterstock 300 zumindest einen Passagierbereich 302 und einen Eingangsbereich aufweist, wobei vorzugsweise der Oberstock 200 und der Unterstock 300 jeweils zumindest eine Flächenheizung 210, 310 aufweisen und/oder die zumindest eine Flächenheizung 210, 310 in einem Passagierbereich 202, 302 oder in einem Eingangsbereich des spurgeführten Fahrzeugs 1 angeordnet ist.

Verfahrensgemäß weist in Ausgestaltung der Oberstock 200 zumindest eine erste Klimazone 230, 231, in der die zumindest eine Flächenheizung 210, 310 angeordnet ist und der Unterstock 300 zumindest eine zweite Klimazone 330, 331, in der die zumindest eine Flächenheizung 210, 310 angeordnet ist, auf. Das Verfahren weist dabei den folgenden Schritt S8 auf: Individuelles Temperieren der zumindest einen ersten Klimazone 230, 231 und der zumindest einen zweiten Klimazone 330, 331 durch die jeweilige zumindest eine Flächenheizung 210, 310 temperierbar sind.

Auch wenn vorstehend Verfahrensschritte S1 bis S8 als sequenzielle Abfolge im Ausführungsbeispiel beschrieben und in der Figur 3 gezeigt sind, umfasst diese Offenbarung auch, dass einzelne Verfahrensschritte weggelassen werden.

Gemäß dem Ausführungsbeispiel wird ferner ein Computerprogrammprodukt bereitgestellt, das in einem Computer eines spurgeführten Fahrzeugs 1 zu verwenden ist, wobei das Computerprogrammprodukt bei Ausführung den Computer veranlasst, ein solches oder wie nachfolgend beschrieben, weitergebildetes Verfahren, durchzuführen.

Gemäß dem Ausführungsbeispiel wird ferner ein computerlesbares Aufzeichnungsmedium bereitgestellt, auf dem ein Computerprogrammprodukt aufgezeichnet ist, wobei das Computerprogrammprodukt bei Ausführung, geeignet ist, in einem Computer des spurgeführten Fahrzeugs 1 zu veranlassen, ein solches oder wie nachfolgend beschrieben, weitergebildetes Verfahren, durchzuführen.

Schließlich wird ein digitaler Zwilling des spurgeführten Fahrzeugs 1 bereitgestellt, wobei der digitale Zwilling ein digitalisiertes Abbild des spurgeführten Fahrzeugs 1 umfasst. Der digitale Zwilling ist dabei derart ausgebildet, dass dieser es ermöglicht, die Funktionalität des zumindest einen Heizsystem 10 zum Beheizen des Innenraums 2, abzubilden und die Wirkung des zumindest einen Heizsystems 10 auf den Innenraum des spurgeführten Fahrzeugs 1, zu simulieren.

Die vorstehende Offenbarung gilt gleichermaßen für ein spurgeführtes Fahrzeug, sowie für das Verfahren, das Computerprogrammprodukt, das computerlesbare Aufzeichnungsmedium und digitalen Zwilling. Gleichsam kann sich die vorstehende Offenbarung auch auf einen einzelnen Wagen eines spurgeführten Fahrzeugs beziehen.

Heizsysteme 10 zum Heizen des Innenraums von spurgeführten Fahrzeugen 1 sind hinsichtlich ihrer Dimensionierung und Auslegung nicht vergleichbar mit den Heizsystemen zum Heizen des Innenraums von nicht spurgeführten Fahrzeugen wie bspw. PKWs oder LKWs.

Abschließend sei erwähnt, dass die Merkmale aller oben beschriebenen Ausführungsvarianten untereinander in beliebiger Weise kombiniert werden können, um weitere andere Ausführungsbeispiele der Erfindung zu bilden. Auch können alle Merkmale von Unteransprüchen jeweils für sich mit jedem Merkmal jedes anderen der Ansprüche kombiniert werden, und zwar jeweils für sich allein oder in beliebiger Kombination, um weitere andere Ausführungsbeispiele zu erhalten.

Obwohl die Erfindung im Detail durch ein Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffes sind Personen mit männlicher, weiblicher oder anderer Geschlechteridentität mit umfasst.

## Patentansprüche

1. Spurgeführtes Fahrzeug (1) zum Personentransport, umfassend einen Innenraum (2) und zumindest ein Heizsystem (10) zum Beheizen des Innenraums (2),
wobei das Heizsystem (10) zumindest eine Flächenheizung (210, 310) und eine Steuerungseinrichtung (500) aufweist, wobei die Steuerungseinrichtung (500) dazu eingerichtet ist, eine Heizleistung (H) der Flächenheizung (210, 310) anhand zumindest zweier Parameter (RI_{I}, R_{A}, B, RIs) einzustellen.

2. Spurgeführtes Fahrzeug (1) nach Anspruch 1,
**dadurch gekennzeichnet, dass**
die zumindest zwei Parameter (RI_{I}, R_{A}, B, RI_{S}) zwei oder mehrere aus der Gruppe der folgenden Parameter sind: Innenraum-Isttemperatur (RI_{I}), Außentemperatur (R_{A}), Belegungsgrad (B) und/oder Innenraum-Solltemperatur (RI_{S}).

3. Spurgeführtes Fahrzeug (1) nach Anspruch 2,
**dadurch gekennzeichnet, dass**
das spurgeführte Fahrzeug (1) zumindest eine Fahrgastzähleinrichtung (600) aufweist, die dazu ausgebildet ist, den Belegungsgrad (B) zu ermitteln und den Belegungsgrad (B) an die Steuerungseinrichtung (500) zu senden und die Steuerungseinrichtung (500) dazu eingerichtet ist basierend auf dem Belegungsgrad (B) als Parameter (B) die Heizleistung (H) der Flächenheizung (210, 310) einzustellen.

4. Spurgeführtes Fahrzeug (1) nach Anspruch 2 oder 3,
**dadurch gekennzeichnet, dass**
das spurgeführte Fahrzeug (1) zumindest einen Innenraum-Isttemperatur-Sensor (510) aufweist, der dazu ausgebildet ist, die Innenraum-Isttemperatur (RI_{I}) zu ermitteln und die Innenraum-Isttemperatur (RI_{I}) an die Steuerungseinrichtung (500) zu senden und die Steuerungseinrichtung (500) dazu eingerichtet ist basierend auf der Innenraum-Isttemperatur (RI_{I}) als Parameter (RI_{I}) die Heizleistung (H) der Flächenheizung (210, 310) einzustellen.

5. Spurgeführtes Fahrzeug (1) nach einem der Ansprüche 2 bis 4,
**dadurch gekennzeichnet, dass**
das spurgeführte Fahrzeug (1) zumindest einen Außentemperatur-Sensor (520) aufweist, der dazu ausgebildet ist, die Außentemperatur (R_{A}) zu ermitteln und die Außentemperatur (R_{A}) an die Steuerungseinrichtung (500) zu senden und die Steuerungseinrichtung (500) dazu eingerichtet ist basierend auf der Außentemperatur (R_{A}) als Parameter (R_{A}) die Heizleistung (H) der Flächenheizung (210, 310) einzustellen.

6. Spurgeführtes Fahrzeug (1) nach einem der Ansprüche 2 bis 5,
**dadurch gekennzeichnet, dass**
die Steuerungseinrichtung (500) dazu eingerichtet ist basierend auf der Innenraum-Solltemperatur (RI_{S}) als Parameter (RI_{S}) die Heizleistung (H) der Flächenheizung (210, 310) einzustellen, wobei vorzugsweise die Innenraum-Solltemperatur (RI_{S}) durch einen Betriebsmodus und/oder eine Mensch-Maschine-Schnittstelle (700) durch die Steuerungseinrichtung (500) vorgebbar ist.

7. Spurgeführtes Fahrzeug (1) nach einem der Ansprüche 2 bis 6,
**dadurch gekennzeichnet, dass**
die Steuerungseinrichtung (500) eingerichtet ist, die Heizleistung (H) der Flächenheizung (210, 310) bei einer Veränderung des Belegungsgrad (B) präventiv, einzustellen, bevor eine Änderung der Innenraum-Isttemperatur (RI_{I}) ermittelt wird.

8. Spurgeführtes Fahrzeug (1) nach einem der vorhergehenden Ansprüche,
**dadurch gekennzeichnet, dass**
das spurgeführte Fahrzeug eine Mehrzahl an Klimazonen (230, 231, 330, 331) aufweist, wobei für jede Klimazone (230, 231, 330, 331) der Belegungsgrad (B) und/oder die Innenraum-Isttemperatur (RI_{I}) ermittelbar ist und/oder eine Innenraum-Solltemperatur (RI_{S}) vorgebbar ist und die Steuerungseinrichtung (500) dazu eingerichtet ist die Heizleistung (H) der Flächenheizung (210, 310) für jede Klimazone (230, 231, 310, 331) individuell einzustellen und/oder jede Klimazone (230, 231, 310, 331) individuell temperierbar ist.

9. Spurgeführtes Fahrzeug (100) nach einem der vorhergehenden Ansprüche,
**dadurch gekennzeichnet, dass**
das spurgeführte Fahrzeug (100) ein Doppelstockfahrzeug ist, mit zumindest einem Oberstock (200) und einem Unterstock (300), wobei der Oberstock (200) zumindest einen Passagierbereich (202) aufweist und der Unterstock (300) zumindest einen Passagierbereich (302) und einen Eingangsbereich aufweist.

10. Spurgeführtes Fahrzeug (100) nach Anspruch 9,
**dadurch gekennzeichnet, dass**
der Oberstock (200) und der Unterstock (300) jeweils zumindest eine Flächenheizung (210, 310) aufweisen und/oder das zumindest eine Flächenheizung (210, 310) in einem Passagierbereich (202, 302) oder in einem Eingangsbereich des spurgeführten Fahrzeugs (1) angeordnet ist.

11. Spurgeführtes Fahrzeug (1) nach Anspruch 8 bis 10,
**dadurch gekennzeichnet, dass**
der Oberstock (200) zumindest eine erste Klimazone (230, 231), in der die zumindest eine Flächenheizung (210, 310) angeordnet ist, aufweist und der Unterstock (300) zumindest eine zweite Klimazone (330, 331), in der die zumindest eine Flächenheizung (210, 310) angeordnet ist, aufweist, welche jeweils individuell durch die zumindest eine Flächenheizung (210, 310) temperierbar sind.

12. Verfahren zum Beheizen eines spurgeführten Fahrzeugs zum Personentransport, umfassend einen Innenraum (2) und zumindest ein Heizsystem (10) zum Beheizen des Innenraums (2), wobei das Heizsystem (10) zumindest eine Flächenheizung (210, 310) und eine Steuerungseinrichtung (500) aufweist, wobei das Verfahren durch den folgenden Schritt gekennzeichnet ist:
- Einstellen der Heizleistung (H) der Flächenheizung an anhand zumindest zweier Parameter (RI_{I}, R_{A}, B, RIs) durch die Steuerungseinrichtung (500).

13. Verfahren nach Anspruch 12,
**dadurch gekennzeichnet, dass**
die zumindest zwei Parameter (RI_{I}, R_{A}, B, RIs) zwei oder mehrere aus der Gruppe der folgenden Parameter sind: Innenraum-Isttemperatur (RI_{I}), Außentemperatur (R_{A}), Belegungsgrad (B) und/oder Innenraum-Solltemperatur (RI_{S}).

14. Verfahren nach Anspruch 13,
**dadurch gekennzeichnet, dass**
das spurgeführte Fahrzeug (1) zumindest eine Fahrgastzähleinrichtung (600) aufweist und das Verfahren die folgenden Schritte aufweist:
- Ermitteln des Belegungsgrads (B) durch die zumindest eine Fahrgastzähleinrichtung (600);
- Senden des Belegungsgrad (B) an die Steuerungseinrichtung (500)
- Einstellen der Heizleistung (H) der Flächenheizung (210, 310) durch die Steuerungseinrichtung (500) basierend auf dem Belegungsgrad (B) als Parameter (B).

15. Verfahren nach einem der Anspruch 13 oder 14,
**dadurch gekennzeichnet, dass**
das spurgeführte Fahrzeug (1) zumindest einen Innenraum-Isttemperatur-Sensor (510) aufweist, und das Verfahren die folgenden Schritte aufweist:
- Ermitteln der Innenraum-Isttemperatur (RI_{I}) durch den zumindest einen Innenraum-Isttemperatur-Sensor (510);
- Senden der Innenraum-Isttemperatur (RI_{I}) an die Steuerungseinrichtung (500);
- Einstellen der Heizleistung (H) der Flächenheizung (210, 310) durch die Steuerungseinrichtung (500) basierend auf der Innenraum-Isttemperatur (RI_{I}) als Parameter (RI_{I}).

16. Verfahren nach einem der Ansprüche 13 bis 15,
**dadurch gekennzeichnet, dass**
das spurgeführte Fahrzeug (1) zumindest einen Außentemperatur-Sensor (520) aufweist, und das Verfahren die folgenden Schritte aufweist:
- Ermitteln der Außentemperatur (R_{A});
- Senden der Außentemperatur (R_{A}) an die Steuerungseinrichtung (500);
- Einstellen der Heizleistung (H) der Flächenheizung (210, 310) durch die Steuerungseinrichtung (500) basierend auf der Außentemperatur (R_{A}) als Parameter (R_{A}).

17. Verfahren, nach einem der Ansprüche 13 bis 16,
**dadurch gekennzeichnet, dass**
die Verfahren durch einen oder mehreren der folgenden Schritte gekennzeichnet ist:
- Einstellen der Heizleistung (H) der Flächenheizung (210, 310) basierend auf der Innenraum-Solltemperatur (RI_{S}) als Parameter (RI_{S}) durch die Steuerungseinrichtung (500);
- Vorgeben der Innenraum-Solltemperatur (RI_{S}) durch einen Betriebsmodus und/oder eine Mensch-Maschine-Schnittstelle (700) durch die Steuerungseinrichtung (500).

18. Verfahren nach einem der Ansprüche 13 bis 17,
**gekennzeichnet durch** den folgenden Schritt:
- Präventives Einstellen der Heizleistung (H) der Flächenheizung (210, 310) bei einer Veränderung des Belegungsgrad (B) durch die Steuerungseinrichtung (500), bevor eine Änderung der Innenraum-Isttemperatur (RI_{I}) ermittelt wird.

19. Verfahren nach einem der Ansprüche 12 bis 18,
**dadurch gekennzeichnet, dass**
das spurgeführte Fahrzeug eine Mehrzahl an Klimazonen (230, 231, 330, 331) aufweist und das Verfahren einen oder mehreren der folgenden Schritte umfasst:
- Ermitteln des Belegungsgrads (B) für jede Klimazone (230, 231, 330, 331);
- Ermitteln der Innenraum-Isttemperatur (RI_{I}) für jede Klimazone (230, 231, 330, 331);
- Vorgeben einer Innenraum-Solltemperatur (RI_{S}) für jede Klimazone (230, 231, 330, 331);
- Individuelles Einstellen der Heizleistung (H) der Flächenheizung (210, 310) für jede Klimazone (230, 231, 310, 331) durch die Steuerungseinrichtung (500)
- Individuelles Temperieren jeder Klimazone (230, 231, 310, 331).

20. Verfahren nach einem der Ansprüche 12 bis 18,
**dadurch gekennzeichnet, dass**
das spurgeführte Fahrzeug (100) ein Doppelstockfahrzeug ist, mit zumindest einem Oberstock (200) und einem Unterstock (300), wobei der Oberstock (200) zumindest einen Passagierbereich (202) aufweist und der Unterstock (300) zumindest einen Passagierbereich (302) und einen Eingangsbereich aufweist, wobei vorzugsweise der Oberstock (200) und der Unterstock (300) jeweils zumindest eine Flächenheizung (210, 310) aufweisen und/oder die zumindest eine Flächenheizung (210, 310) in einem Passagierbereich (202, 302) oder in einem Eingangsbereich des spurgeführten Fahrzeugs (1) angeordnet ist.

21. Verfahren nach Anspruch 20,
**dadurch gekennzeichnet, dass**
der Oberstock (200) zumindest eine erste Klimazone (230, 231), in der die zumindest eine Flächenheizung (210, 310) angeordnet ist, aufweist und der Unterstock (300) zumindest eine zweite Klimazone (330, 331), in der die zumindest eine Flächenheizung (210, 310) angeordnet ist, und das Verfahren den folgenden Schritt aufweist:
Individuelles Temperieren der zumindest einen ersten Klimazone (230, 231) und der zumindest einen zweiten Klimazone (330, 331) durch die jeweilige zumindest eine Flächenheizung (210, 310) temperierbar sind.

22. Computerprogrammprodukt, das in einem Computer eines spurgeführten Fahrzeugs (1) zu verwenden ist, wobei das Computerprogrammprodukt bei Ausführung den Computer veranlasst, ein Verfahren nach einem der Ansprüche 12 bis 21 durchzuführen.

23. Computerlesbares Aufzeichnungsmedium, auf dem ein Computerprogrammprodukt aufgezeichnet ist, **dadurch gekennzeichnet, dass** das Computerprogrammprodukt bei Ausführung, geeignet ist, in einem Computer des spurgeführten Fahrzeugs (1) zu veranlassen, ein Verfahren nach einem der Ansprüche 12 bis 21 durchzuführen.

24. Digitaler Zwilling eines spurgeführten Fahrzeugs (1) nach einem der Ansprüche 1 bis 11,
wobei der digitale Zwilling ein digitalisiertes Abbild des spurgeführten Fahrzeugs (1) umfasst.
